# EUROPEAN PATENT SPECIFICATION

(11) **EP 2 785 080 B1**
(45) Date of publication and mention of the grant of the patent: **10.06.2020**
(21) Application number: 13160998.4
(22) Date of filing: 26.03.2013
(51) Int. Cl.: H04W 4/06

(54) **Method for Recovering MBMS services after reset of a distributed MCE hosted in an eNB of a LTE network**
Verfahren zur Wiederherstellung von MBMS-Diensten nach einem Reset eines verteilten, in einem eNB eines LTE-Netzwerks gehosteten MCE
Procédé de récupération de services MBMS après la réinitialisation d'un MCE distribué hébergé dans un eNB de réseau LTE

(43) Date of publication of application: 01.10.2014
(73) Proprietor: Alcatel Lucent, 91620 Nozay (FR)
(72) Inventor: Godin, Philippe, 91620 Nozay (FR); Delorme, Amaury, 44708 Orvault (FR)
(74) Representative: Browne, Robin Forsythe

(56) References cited:
- WO-A2-2013/011375
- 3GPP: "3rd Generation Partnership Project; Technical Specification Group Radio Access Network; Evolved Universal Terrestrial Radio Access Network (E-UTRAN); M3 Application Protocol (M3AP) (Release 11)", 3RD GENERATION ARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 15 March 2013 (2013-03-15), - 15 March 2013 (2013-03-15), pages 1-64, XP002715431,

## Description

### Field of the Invention

The present invention relates to LTE ("Long Term Evolution") networks, and more precisely to recovering of MBMS service(s) after a reset of a distributed Multicell/Multicast Coordination Entity (or MCE) of such a LTE network.

### Background of the Invention

One means here by "LTE network" the combination of an E-UTRAN ("Evolved Universal Terrestrial Radio Access Network") and a core network (called EPC ("Evolved Packet Core")), which is an evolution of the UMTS ("Universal Mobile Telecommunications System") network towards a high data rate, low latency and packet optimized network, currently specified by the 3GPP ("3^{rd} Generation Partnership Project"), notably in 3GPP Technical Specification 36.300. As described in this Technical Specification 36.300, the core network comprises at least one Mobility Management Entity (or MME), at least one Multicell/Multicast Coordination Entity (or MCE), and base stations called eNBs ("evolved Node Bs" or "E-UTRAN Node Bs").

In the case where the LTE network offers MBMS ("Multimedia Broadcast/Multicast Services"), an eNB may serve at least one MBSFN ("MBMS Single Frequency Network") area, several eNBs may serve the same MBSFN area, and MCEs may be centralized or distributed into the eNBs.

The invention concerns the distributed MCE architecture in which a MBSFN area can be spread over several MCEs (each hosted in one eNB) while the resources of that MBSFN area are typically static configured, and in which allocation of radio resources can differ from one MBSFN area to another.

As it is known by the man skilled in the art, the key challenge of operating MBMS in the distributed MCE architecture is to maintain the synchronization of content delivery, i.e. all eNBs involved in a given MBSFN area must absolutely broadcast the same data at any point in time. This implies that all eNBs serving an MBSFN area broadcast exactly the same list of MBMS services (TMGI, session id) and in the same order at a given point in time.

This requirement raises an issue when a pre-emption of MBMS service(s) occurs in a MCE, i.e. when a MCE has several services initially on-going for a given MBSFN area and that the MCE receives a MBMS new session start message to order it to start a new service. Depending on the ARP ("Allocation Pre-emption Priority") parameter included in the MBMS session start message, the MCE may decide to pre-empt one of the initial services to accept the new service. Such a pre-emption occurs when the MCE finds that there are not enough resources in the MBSFN area for the new service, and when this new service has a higher priority than the initial service to be pre-empted. In this case, MCE stops the initial service to be pre-empted and starts delivering the new service instead.

Actually, when a MCE pre-empts an initial service, it does not inform the concerned MME. So, if later one of the remaining initial service ends (after reception of a MBMS session stop message by the MCE), the latter may decide to restart delivering the previously pre-empted service (if it is still valid) if the resources freed by the ended service are enough to restart delivering this previously pre-empted service. Unfortunately, when a MCE restarts delivering a previously pre-empted service, the concerned MME is not informed of that.

Moreover, when a MCE resets (or in case of M3 path failure), this reset MCE sends a Reset message to the upper concerned MME, and the latter tries subsequently to restore the MBMS contexts and the services in the reset MCE by restarting the on-going sessions. This is beneficial in order to avoid the eNB hosting this MCE to remain silent in the middle of an MBSFN area, which would also lead to content de-synchronization with immediate neighbour eNBs of the same MBSFN area as soon as one new service would be started in that MBSFN area. However, if some sessions have been pre-empted in the MCE and also if some of the pre-empted sessions have been later on resumed, the upper MME has not been made aware of the situation. Therefore, the upper MME cannot guess when it receives the Reset message from the MCE what are the exact on-going sessions in each MBSFN area in which this MCE is involved. Now, if the upper MME consequently unduly asks the MCE to restart services that were not on-going, content synchronization is lost in the MBSFN area because neighbour eNBs involved in the same MBSFN area do not deliver the same data. Document 3GPP TS 36444, 3rd Generation Partnership Project; Technical Specification Group Radio Access Network; Evolved Universal Terrestrial Radio Access Network (EUTRAN); M3 Application Protocol (M3AP) (Release 11), discloses a procedure to receive MBMS services after a reset of a MCE in a LTE network.

Similarly, if the upper MME consequently asks the MCE to restart the previously on-going services but not in the right order due to succession of pre-emption and resumes, content synchronization will be lost again.

This issue appears to be very severe because content de-synchronization means interruption of MBMS services in a MBSFN area which is at least as large as the area covered by the involved eNB cells.

To try to improve the situation, it has been proposed, when a MBMS session Start received by a MCE leads to pre-emption actions, that this MCE indicates back to the MME the list of pre-empted services in the MBMS session start response message. However, this solution presents at least three drawbacks. Indeed, the MME will be aware of the pre-empted services except if a previously pre-empted service has been resumed because resources have been freed due to some other stopped services. Moreover, a MME is normally not aware of MBSFN areas and therefore cannot investigate and track a per MBSFN area analysis when it receives a pre-emption indication, and cannot maintain a per-MBSFN area knowledge of the order of on-going services. More, this solution can only report the pre-empted service that has been started over a particular M3 instance for which an MBMS session start message has been received. But, if the MCE is served by more than one MME, and if the pre-empted service had been previously initiated by a second MME while the MBMS service start message triggering the pre-emption action has been sent by a first MME, then the second MME is not aware of that and the proposed solution does not work.

### Summary of the invention

So the invention aims notably at overcoming at least one of the above mentioned drawbacks so that an eNB does not remain silent after a reset leading to some coverage hole in an MBMS area or to reception problems for the user communication equipments, and be not content desynchronized.

To this effect the invention notably provides a method, intended for recovering MBMS service(s) after a reset of a distributed Multicell/Multicast Coordination Entity (or MCE) involved in at least one MBSFN area and hosted in an evolved Node B (or eNB) of a LTE network comprising at least one Mobility Management Entity (or MME), and comprising a step during which the Multicell/Multicast Coordination Entity retrieves into the LTE network, after having been reset, ordered lists of MBMS services delivered in each MBSFN area served by its evolved Node B, to allow contents, associated to the MBMS services of these retrieved lists, to be synchronously delivered by every evolved Node Bs of the LTE network that serve these MBSFN areas.

Further embodiments of the method according to the invention may include additional characteristics considered separately or combined, and notably :
- in a first embodiment, before being reset the MCE may send lists of MBMS services, delivered in each MBSFN area served by its eNB, to at least one MME, and the latter (MME) may store these received lists to be able to send them back to the MCE when it receives a Reset message from it;
   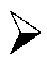 before being reset the MCE may send lists of MBMS services, delivered in each MBSFN area served by its eNB, to at least one MME, each time there is an update in one of these lists;
   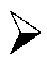 the MME may send back the stored lists in a new element of a Reset Acknowledge message, or in a dedicated message after having sent a Reset Acknowledge message, or else in an extension of a MBMS session start message after the reset;
   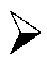 during the step the MME may send back the stored lists with parameters associated with the MBMS services they comprise and that must be restarted;
   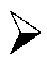 in a variant, during the step the MME may send at least one individual session start message to the reset MCE to indicate parameters associated with the MBMS services to be restarted;
- in a second embodiment, the reset MCE may order to its eNB to request from everyone of its neighbour eNBs the respective ordered lists of on-going MBMS services they deliver in each MBSFN area they serve, then may deduce from these ordered lists each service to be restarted and in which order in each of the MBSFN areas it serves;
   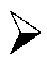 during the step the neighbour eNBs may send their respective ordered lists with parameters associated with the MBMS services they comprise;
   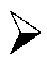 in a variant, during the step the MME may send at least one individual session start message to the reset MCE to indicate parameters associated with the MBMS services to be restarted.

Further embodiment of the invention also offers a computer program product comprising a set of instructions arranged for performing a method such as the one above introduced to allow recovering of MBMS service(s) after a reset of a distributed Multicell/Multicast Coordination Entity hosted in an evolved Node B of a LTE network comprising at least one Mobility Management Entity.

### Brief Description of the Drawings

Other features and advantages of the invention will become apparent on examining the detailed specifications hereafter and the appended drawings, wherein:
- figure 1 schematically and functionally illustrates a part of an LTE network comprising evolved Node Bs, each comprising a Multicell/Multicast Coordination Entity with a device according to the invention,
- figure 2 schematically illustrates a first example of sequence diagram intended for allowing content synchronization in an LTE network after a reset of a Multicell/Multicast Coordination Entity, and
- figure 3 schematically illustrates a second example of sequence diagram intended for allowing content synchronization in an LTE network after a reset of a Multicell/Multicast Coordination Entity.

The appended drawing may serve not only to complete the invention, but also to contribute to its definition, if need be.

### Detailed Description

The invention aims, notably, at offering a method, and an associated device D, intended for allowing recovering of MBMS service(s) after a reset of a distributed Multicell/Multicast Coordination Entity MCEi of a LTE network with a distributed MCE architecture.

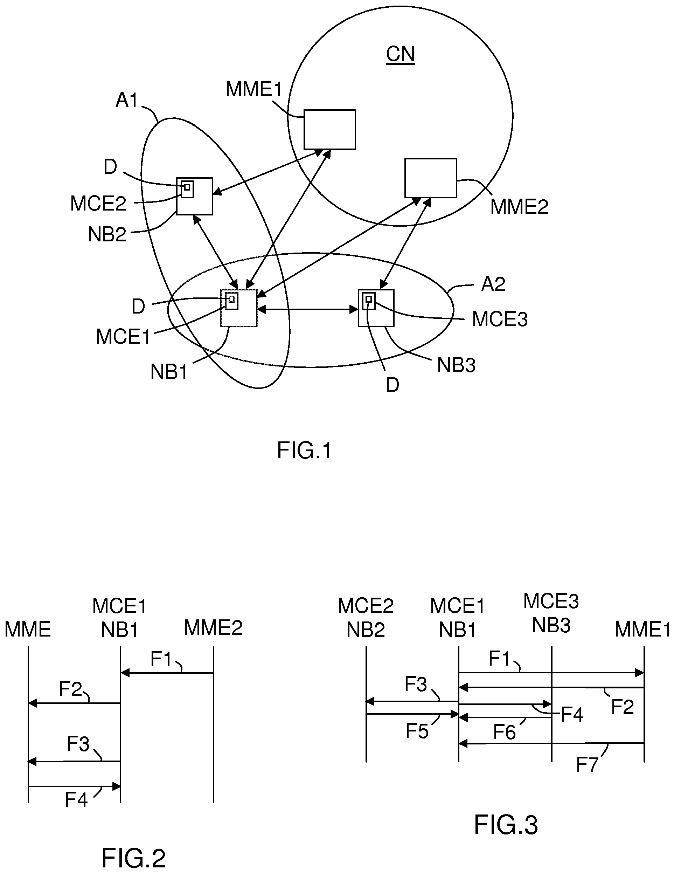

A simplified example of LTE network is illustrated in figure 1. In this example, the LTE network comprises a core network CN, called EPC ("Evolved Packet Core"), and three base stations NBi (i = 1 to 3), called evolved Node Bs (or eNBs), each coupled to the core network CN and each hosting a Multicell/Multicast Coordination Entity MCEi.

The core network CN comprises notably at least one Mobility Management Entity (or MME) MMEj. In the non-limiting example, the core network CN comprises two Mobility Management Entities MME1 and MME2 (j = 1 or 2). But it could comprise only one MME or more than two MMEs.

Each evolved Node B NBi is coupled to at least one Mobility Management Entity MMEj through a S1 interface and serves at least one MBSFN area Ak in a part of which it delivers contents associated to MBMS services. A MBSFN area Ak can be spread over several Multicell/Multicast Coordination Entities MCEi.

In the non-limiting example the first evolved Node B NB1 serves first A1 and second A2 MBSFN areas, the second evolved Node B NB2 serves the first MBSFN area A1 (k = 1), and the third evolved Node B NB3 serves the second MBSFN area A2 (k = 2).

Each Multicell/Multicast Coordination Entity MCEi is coupled to at least one Mobility Management Entity MMEj through a M3 interface, is involved in MBMS Session Control Signalling, and manages the E-MBMS Service Multiplex (for instance to decide which services are to be multiplexed on which channels (MCH)). It controls radio resource allocation in each MBSFN area Ak that is served by its evolved Node B NBi.

As mentioned above, the invention notably proposes a method intended for allowing recovery of MBMS service(s) after a reset of a Multicell/Multicast Coordination Entity MCEi.

This method comprises a step during which a Multicell/Multicast Coordination Entity MCEi retrieves into its LTE network, after having been reset, ordered lists of MBMS services delivered in each MBSFN area Ak that is served by its evolved Node B NBi, to allow contents, that are associated to the MBMS services listed in these retrieved lists, to be synchronously delivered by every evolved Node Bs NBi and NBi' (with i' ≠ i) serving the above mentioned MBSFN areas Ak.

This method step may be implemented in each Multicell/Multicast Coordination Entity MCEi by a device D.

This device D may be made of software modules (and in this case it constitutes a computer program product comprising a set of instructions arranged for performing the method when it is executed by processing means of the Multicell/Multicast Coordination Entity MCEi). But this is not mandatory. Indeed, it may be made of a combination of electronic circuit(s) (or hardware module(s)) and software modules.

The ordered lists that are retrieved by a reset Multicell/Multicast Coordination Entity MCEi may comprise either MBMS services that were delivered just before its reset in each MBSFN area Ak served by its evolved Node B NBi, or MBMS services that are currently delivered just after its reset in each MBSFN area Ak served by its evolved Node B NBi.

In the first embodiment, before being reset the Multicell/Multicast Coordination Entity MCEi sends lists of on-going MBMS services with their status (on-going or pre-empted), that are delivered in each MBSFN area Ak served by its evolved Node B NBi (and therefore where it is involved), to at least one Mobility Management Entity MMEj. This can be done each time a MBMS service modification occurs in a MBSFN area Ak served by its evolved Node B NBi (and therefore each time one of the lists is updated), either by means of a new dedicated message or by means of an existing extended message.

Each time a Mobility Management Entity MMEj receives these lists from a Multicell/Multicast Coordination Entity MCEi, it stores them (without processing them) into a memory means (logical or physical), for instance of a cache type, in correspondence with the identifier of this Multicell/Multicast Coordination Entity MCEi. So, when it receives a Reset message from a Multicell/Multicast Coordination Entity MCEi that has just been reset, the concerned Mobility Management Entity MMEj is able to send the stored lists of this Multicell/Multicast Coordination Entity MCEi back to the latter (MCEi).

A Mobility Management Entity MMEj may send back stored lists according to different manner. Indeed, it may send them back in a new and additional element of a Reset Acknowledge message, or in a new dedicated message after having sent a Reset Acknowledge message, or else in an extension of a MBMS session start message after the reset occurred.

It is important to note that during the step the Mobility Management Entity MMEj may advantageously send back stored lists with parameters associated with the MBMS services they comprise and that must be restarted. In a variant, the Mobility Management Entity MMEj may send at least one individual session start message to a reset Multicell/Multicast Coordination Entity MCEi to indicate parameters that are associated with the MBMS services it has to restart.

So, the first embodiment relies on interactions between a Multicell/Multicast Coordination Entity MCEi and at least one Mobility Management Entity MMEj over their M3 interfaces.

A first example of sequence diagram, intended for allowing content synchronization after a reset of the first Multicell/Multicast Coordination Entity MCE1, and corresponding to the first embodiment, is illustrated in figure 2. In this first example it is considered that the first Multicell/Multicast Coordination Entity MCE1 has MBMS services 1, 3 and 4 in the first MBSFN area A1 and MBMS services 3 and 4 in the second MBSFN area A2, for its first evolved Node B NB1.

This first sequence starts with a step 10 during which the second Mobility Management Entity MME2 sends a session stop of MBMS service 3 to the first Multicell/Multicast Coordination Entity MCE1. Then the first Multicell/Multicast Coordination Entity MCE1 stops MBMS service 3 and decides to restart a previously pre-empted MBMS service 2 in the first MBSFN area A1 and a previously pre-empted MBMS service 1 in the second MBSFN area A2.

Then in a step 20 the first Multicell/Multicast Coordination Entity MCE1 informs the first Mobility Management Entity MME1 (optionally also the second one MME2) that now onwards MBMS services 1, 4 and 2 will be delivered in that order in the first MBSFN area A1 and MBMS services 4 and 1 will be delivered in that order in the second MBSFN area A2. Then the first Mobility Management Entity MME1 (optionally also the second one MME2) store(s) these two ordered lists of MBMS services in correspondence with the identifier of the first Multicell/Multicast Coordination Entity MCE1.

Then in a step 30 the first Multicell/Multicast Coordination Entity MCE1 sends a Reset message to the first Mobility Management Entity MME1 (optionally also to the second one MME2) to inform it (them) of its recent reset. Then in a step 40 the first Mobility Management Entity MME1 (optionally also the second one MME2) sends a Reset Acknowledge message, including the stored ordered lists and parameters associated with the MBMS services to be restarted, to the first Multicell/Multicast Coordination Entity MCE1, so that it controls delivery of the MBMS services 1, 4 and 2 in that order in the first MBSFN area A1 and of the MBMS services 4 and 1 in that order in the second MBSFN area A2.

In the second embodiment, during the step and then just after having been reset, the Multicell/Multicast Coordination Entity MCEi orders to its evolved Node B NBi to request from everyone of its neighbour evolved Node Bs NBi' (i' ≠ i) the respective ordered lists of on-going MBMS services they deliver in each MBSFN area Ak they serve. Then this reset Multicell/Multicast Coordination Entity MCEi deduces (or infers) from these requested ordered lists each service it will have to restart and in which order in each of the MBSFN areas Ak in which it is involved.

For instance, during the step the neighbour evolved Node Bs NBi' send their respective ordered lists with parameters that are associated with the MBMS services they comprise. In a variant, a Mobility Management Entity MMEj may send at least one individual session start message to the reset Multicell/Multicast Coordination Entity MCEi to indicate parameters that are associated with the MBMS services it has to restart.

So, the second embodiment relies on interactions between evolved Node Bs NBi over their X2 interfaces.

A second example of sequence diagram, intended for allowing content synchronization after a reset of the first Multicell/Multicast Coordination Entity MCE1, and corresponding to the second embodiment, is illustrated in figure 3.

This second sequence starts with a step 10 during which the first Multicell/Multicast Coordination Entity MCE1 sends a Reset message to the first Mobility Management Entity MME1 (optionally also to the second one MME2) to inform it (them) of its recent reset. Then in a step 20 the first Mobility Management Entity MME1 (optionally also the second one MME2) sends a Reset Acknowledge message to the first Multicell/Multicast Coordination Entity MCE1.

Then in steps 30 and 40 the first Multicell/Multicast Coordination Entity MCE1 orders to its first evolved Node B NB1 to request from everyone of its neighbour evolved Node Bs NBi' (here NB2 and NB3) the respective ordered lists of on-going MBMS services they deliver in the first A1 and second A2 MBSFN areas they serve. Then in a step 50 the second evolved Node B NB2 sends the ordered list of MBMS services it is serving in the first MBMS area A1 (for instance MBMS services 1, 4 and 2 in that order) to the first evolved Node B NB1, and in a step 60 the third evolved Node B NB3 sends the ordered list of MBMS services it is serving in the second MBMS area A2 (for instance MBMS services 4 and 1 in that order) to the first evolved Node B NB1. Then the first Multicell/Multicast Coordination Entity MCE1 deduces (or infers) from these requested ordered lists that it will have to restart MBMS services 1, 4 and 2 in the first MBMS area A1 and MBMS services 4 and 1 in the second MBMS area A2. Then in a step 70, each involved Mobility Management Entity MMEj starts resending its service session start messages to the first Multicell/Multicast Coordination Entity MCE1.

This invention enables a distributed Multicell/Multicast Coordination Entity to successfully and fully recover after a reset, to be able to restart the services that were on-going, just before its reset (in the first embodiment) or just after its reset (in the second embodiment), in each of the MBSFN areas in which it is involved, so that a synchronized delivery of contents be ensured through any MBSFN areas.

The invention is not limited to the embodiments of method, device and Multicell/Multicast Coordination Entity described above, which are provided only as examples, but encompasses all alternative embodiments which may be considered by one skilled in the art within the scope of the claims hereafter.

## Claims

1. Method for recovering MBMS service(s) after a reset of a distributed Multicell/Multicast Coordination Entity, MCEi, involved in at least one MBSFN area and hosted in an evolved Node B, NBi, of a LTE network comprising at least one Mobility Management Entity, MMEj, said method comprising a step during which said Multicell/Multicast Coordination Entity, MCEi, retrieves into said LTE network, after having been reset, ordered lists of MBMS services delivered in each MBSFN area served by its evolved Node B, NBi, to allow contents, associated to the MBMS services of said retrieved lists, to be synchronously delivered by every evolved Node Bs, NBi, of said LTE network serving said MBSFN areas and the method **characterized by** before being reset said Multicell/Multicast Coordination Entity, MCEi, sends lists of MBMS services, delivered in each MBSFN area served by its evolved Node B ,NBi, to at least one Mobility Management Entity, MMEj, each time there is an update in one of said lists.

2. Method according to claim 1, wherein before being reset said Multicell/Multicast Coordination Entity, MCEi, sends lists of MBMS services, delivered in each MBSFN area served by its evolved Node B, NBi, to at least one Mobility Management Entity, MMEj, and the latter, MMEj, stores these received lists to be able to send them back to said Multicell/Multicast Coordination Entity ,MCEi, when it receives a Reset message from it.

3. Method according to one of claims 1 and 2, wherein in said step said Mobility Management Entity, MMEj, sends back said stored lists in a new element of a Reset Acknowledge message.

4. Method according to one of claims 1 and 2, wherein in said step said Mobility Management Entity, MMEj, sends back said stored lists in a dedicated message after having sent a Reset Acknowledge message.

5. Method according to one of claims 1 and 2, wherein in said step said Mobility Management Entity, MMEj, sends back said stored lists in an extension of a MBMS session start message after said reset.

6. Method according to one of claims 2 to 5, wherein in said step said Mobility Management Entity, MMEj, sends back said stored lists with parameters associated with said MBMS services they comprise and that must be restarted.

7. Method according to claim 1, wherein in said step said reset Multicell/Multicast Coordination Entity, MCEi, orders to its evolved Node B, NBi, to request from everyone of its neighbour evolved Node Bs, NBi', the respective ordered lists of on-going MBMS services they deliver in each MBSFN area they serve, then deduces from these ordered lists each service to be restarted and in which order in each of the MBSFN areas in which it is involved.

8. Method according to claim 7, wherein in said step said neighbour evolved Node Bs, NBi', send their respective ordered lists with parameters associated with said MBMS services they comprise.

9. Method according to one of claims 2 to 5 and 7, wherein in said step said Mobility Management Entity, MMEj, sends at least one individual session start message to said reset Multicell/Multicast Coordination Entity, MCEi, to indicate parameters associated with said MBMS services to be restarted.

10. Computer program product comprising a set of instructions arranged for performing the method according to one of claims 1 to 9 to allow recovering of MBMS service(s) after a reset of a distributed Multicell/Multicast Coordination Entity, MCEi, hosted in an evolved Node B, NBi, of a LTE network comprising at least one Mobility Management Entity, MMEj.

## Patentansprüche

1. Verfahren zum Wiederherstellen von MBMS-Dienst(en) nach einem Zurücksetzen (Reset) einer verteilten Multicell/Multicast Coordination Entity, MCEi, die an mindestens einem MBSFN-Bereich beteiligt ist und die in einem Evolved Node B, NBi, eines LTE-Netzes gehostet wird, das mindestens eine Mobility Management Entity, MMEj, umfasst, wobei das Verfahren einen Schritt umfasst, während dessen die Multicell/Multicast Coordination Entity, MCEi, in das LTE-Netz, nachdem sie zurückgesetzt worden ist, geordnete Listen von MBMS-Diensten abruft, die in jedem MBSFN-Bereich geliefert werden, der von seinem Evolved Node B, NBi, bedient wird, um es zu ermöglichen, dass Inhalte, die den MBMS-Diensten der abgerufenen Listen zugeordnet sind, von jedem Evolved Node B, NBi, des LTE-Netzes, das die MBSFN-Bereiche bedient, synchron geliefert werden,
wobei das Verfahren **dadurch gekennzeichnet ist,**
**dass** vor dem Zurücksetzen die Multicell/Multicast Coordination Entity, MCEi, Listen von MBMS-Diensten, die in jedem MBSFN-Bereich geliefert werden, der von seinem Evolved Node B, NBi, bedient wird, jedes Mal, wenn eine Aktualisierung in einer der Listen erfolgt, an mindestens eine Mobility Management Entity, MMEj, sendet.

2. Verfahren nach Anspruch 1,
wobei die Multicell/Multicast Coordination Entity, MCEi, vor dem Zurücksetzen Listen von MBMS-Diensten, die in jedem MBSFN-Bereich geliefert werden, der von seinem Evolved Node B, NBi, bedient wird, an mindestens eine Mobility Management Entity, MMEj, sendet und letztere, MMEj, diese empfangenen Listen speichert, um sie an die Multicell/Multicast Coordination Entity, MCEi, zurücksenden zu können, wenn sie von dieser eine Reset-Nachricht empfängt.

3. Verfahren nach einem der Ansprüche 1 und 2,
wobei in dem Schritt die Mobility Management Entity, MMEj, die gespeicherten Listen in einem neuen Element einer Reset-Acknowledge-Nachricht zurücksendet.

4. Verfahren nach einem der Ansprüche 1 und 2,
wobei in dem Schritt die Mobility Management Entity, MMEj, die gespeicherten Listen in einer dezidierten Nachricht zurücksendet, nachdem sie eine Reset-Acknowledge-Nachricht gesendet hat.

5. Verfahren nach einem der Ansprüche 1 und 2,
wobei in dem Schritt die Mobility Management Entity, MMEj, die gespeicherten Listen in einer Erweiterung einer MBMS-Sitzungsstartnachricht nach dem Zurücksetzen zurückschickt.

6. Verfahren nach einem der Ansprüche 2 bis 5,
wobei in dem Schritt die Mobility Management Entity MMEj die gespeicherten Listen mit Parametern zurücksendet, die mit den MBMS-Diensten, die sie umfassen und die neu gestartet werden müssen, verknüpft sind.

7. Verfahren nach Anspruch 1,
wobei in dem Schritt die zurückgesetzte Multicell/Multicast Coordination Entity, MCEi, ihrem Evolved Node B, NBi, befiehlt, von jedem ihrer benachbarten Evolved Node Bs, NBi', die jeweils bestellten Listen der laufenden MBMS-Dienste anzufordern, die sie in jedem von ihnen bedienten MBSFN-Bereich liefern, und dann von diesen bestellten Listen jeden neu zu startenden Dienst ableitet und in welcher Reihenfolge dies in jedem der MBSFN-Bereiche erfolgt, an denen sie beteiligt ist.

8. Verfahren nach Anspruch 7,
wobei in dem Schritt die benachbarten Evolved Node Bs, NBi', ihre jeweiligen geordneten Listen mit Parametern senden, die mit den MBMS-Diensten, die sie umfassen, verknüpft sind.

9. Verfahren nach einem der Ansprüche 2 bis 5 und 7,
wobei in dem Schritt die Mobility Management Entity, MMEj, mindestens eine individuelle Sitzungsstartnachricht an die zurückgesetzte Multicell/Multicast Coordination Entity, MCEi, sendet, um Parameter anzuzeigen, die mit den neu zu startenden MBMS-Diensten verbunden sind.

10. Computerprogrammprodukt, das einen Satz von Befehlen umfasst,
die für die Durchführung des Verfahrens nach einem der Ansprüche 1 bis 9 eingerichtet sind, um die Wiederherstellung von MBMS-Dienst(en) nach einem Zurücksetzen (Reset) einer verteilten Multicell/Multicast Coordination Entity, MCEi, zu ermöglichen, die in einem Evolved Node B, NBi, eines LTE-Netzes gehostet wird, das mindestens eine Mobility Management Entity, MMEj, umfasst.

## Revendications

1. Procédé de récupération de service(s) MBMS après une remise à zéro d'une Entité de Coordination Multicellulaire / Multidiffusion i (MCEi) distribuée impliquée dans au moins une zone MBSFN et hébergée dans un Nœud Bi (NBi) évolué d'un réseau LTE comprenant au moins une Entité de Gestion de Mobilité j (MMEj), ledit procédé comprenant une étape pendant laquelle ladite Entité de Coordination Multicellulaire / Multidiffusion i (MCEi) rapatrie dans ledit réseau LTE, après une remise à zéro, des listes ordonnées de services MBMS livrés à chaque zone MBSFN desservie par son Nœud Bi (NBi) évolué afin de permettre au contenu, associé aux services MBMS desdites listes rapatriées, d'être livré de manière synchrone par chaque Nœud Bi (NBi) évolué dudit réseau LTE desservant lesdites zones MBSFN, le procédé étant **caractérisé en ce que**:
avant la remise à zéro, ladite Entité de Coordination Multicellulaire / Multidiffusion i (MCEi) envoie des listes de services MBMS, livrées à chaque zone MBSFN desservie par son Nœud Bi (NBi) évolué, à au moins une Entité de Gestion de Mobilité j (MMEj), à chaque fois qu'il y a une mise à jour de l'une desdites listes.

2. Procédé selon la revendication 1, selon lequel avant la remise à zéro, ladite Entité de Coordination Multicellulaire / Multidiffusion i (MCEi) envoie des listes de services MBMS, livrées à chaque zone MBSFN desservie par son Nœud Bi (NBi) évolué, à au moins une Entité de Gestion de Mobilité j (MMEj), et cette dernière stocke ces listes reçues afin de pouvoir les renvoyer à ladite Entité de Coordination Multicellulaire / Multidiffusion i (MCEi) lorsque la MMEj reçoit un message de Remise à Zéro en provenance de la MCEi.

3. Procédé selon l'une quelconque des revendications 1 ou 2, selon lequel lors de ladite étape ladite Entité de Gestion de Mobilité j (MMEj) renvoie lesdites listes stockées dans un nouvel élément d'un message d'Accusé de Remise à Zéro.

4. Procédé selon l'une quelconque des revendications 1 ou 2, selon lequel lors de ladite étape ladite Entité de Gestion de Mobilité j (MMEj) renvoie lesdites listes stockées dans un message dédié après avoir envoyé un message d'Accusé de Remise à Zéro.

5. Procédé selon l'une quelconque des revendications 1 ou 2, selon lequel lors de ladite étape ladite Entité de Gestion de Mobilité j (MMEj) renvoie lesdites listes stockées dans une extension d'un message de démarrage de session MBMS après ladite remise à zéro.

6. Procédé selon l'une quelconque des revendications 2 à 5, selon lequel lors de ladite étape ladite Entité de Gestion de Mobilité j (MMEj) renvoie lesdites listes stockées avec des paramètres associés auxdits services MBMS qu'ils comprennent et qui doivent être redémarrés.

7. Procédé selon la revendication 1, selon lequel lors de ladite étape ladite Entité de Coordination Multicellulaire / Multidiffusion i (MCEi) commande à ses Nœuds Bi (NBi) évolués de solliciter de chacun des ses Nœuds Bsi (NBi') évolués voisins, les listes respectives ordonnées des services MBMS en cours qu'ils livrent à chaque zone MBSFN qu'ils desservent, puis elle déduit de ces listes ordonnées chaque service devant être redémarré, et l'ordre dans lequel elle est impliquée dans chacune des zones MBSFN.

8. Procédé selon la revendication 7, selon lequel lors de ladite étape ledit Nœud Bsi (NBi') évolué voisin envoie ses listes respectives ordonnées avec les paramètres associés auxdits services MBMS qu'ils comprennent.

9. Procédé selon l'une quelconque des revendications 2 à 5, selon lequel lors de ladite étape ladite Entité de Gestion de Mobilité j (MMEj) envoie au moins un message de démarrage de session individuel à ladite Entité de Coordination Multicellulaire / Multidiffusion i (MCEi) remise à zéro afin d'indiquer les paramètres associés auxdits services MBMS devant être redémarrés.

10. Produit de programme d'ordinateur comprenant un jeu d'instructions disposé pour effectuer la mise en œuvre du procédé selon l'une quelconque des revendications 1 à 9, afin de permettre la récupération de service(s) MBMS après une remise à zéro d'une Entité de Coordination Multicellulaire / Multidiffusion i (MCEi) distribuée hébergée dans un Nœud Bi (NBi) évolué d'un réseau LTE comprenant au moins une Entité de Gestion de Mobilité j (MMEj).
